# EUROPEAN PATENT APPLICATION

(11) **EP 1 672 513 A1**
(43) Date of publication of application: **21.06.2006**
(21) Application number: 05008369.0
(22) Date of filing: 18.04.2005
(51) Int. Cl.: G06F 13/40, G03B 29/00, H04N 5/225

(54) **Digital image taking device with function of host for data exchange**

(30) Priority: 17.12.2004 CN 200410094185
(71) Applicant: Chang, Cheng-Chun, Hsin-Tien City Tapei Hsien, Taiwan (TW)
(72) Inventor: Chang, Cheng-Chun, Hsin-Tien City Tapei Hsien, Taiwan (TW)
(74) Representative: Negrini, Elena

(57) **Abstract**

A digital image picking device (1) with function of host comprises an image picking part (11), a display (12), a signal connecting port (13) and an input unit (14). The input unit has a mode shift part (141) with a device mode and a master control mode can be operated manually or automatically. When the mode shift part (141) is shifted to the master control mode, a master-slave chip (18) in the input unit can be triggered to allow the digital image picking device (1) becoming a host end to browse or play a graphic file, a movie file or a music file of an external device via the display (12) once the signal connecting port (13) is connected to the external device.

## Description

The present invention relates to a digital image picking device, and more particularly to a digital image picking device that provides function of host.

Due to computer technologies developing rapidly, various articles for daily use are getting digitalized. For instance, the digital camera or the digital video has been instead of traditional film camera or magnetic tape video. Taking the digital camera as an example, digitalized graphic data can be stored in a built-in memory or an inserted memory such that the taken picture can be shown on the display itself immediately instead of the traditional camera having a process of the film being developed. Hence, the traditional camera is incapable of competing with the digital camera.

Even if the memory card provides hundreds megabytes or several gigabytes, the capacity thereof still has its limitation. Traditionally, the memory card with graphic or image files has to be taken out from the digital camera and inserted into a card read and data in the memory card is accessed by a computer such as being read, written, deleted or copied via a card read in case of no USB transmission interface being provided in the digital camera or directly in case of A USB transmission interface being provided in the digital camera.

Hence, the computer acts as a host and others are peripheral devices such as the card read and the digital camera such that it is incapable of connecting with each other between the peripheral devices directly and all the data has to be transmitted via the host (computer).

Due to the preceding data storage problem, external storage devices are developed on the market such as X'S-Drive Super external multimedia storage device with model number VP6210 made by Vosonic Technology Co. has an inner 2.5 inch hard disk as a storage loader and a facial display for playing graphic, movie or MP3 file with two lateral sides having a plurality of sockets for being inserted with different types memory cards.

Basically, the external storage device is a peripheral to the computer and the display not only increases fabricating cost and consumes power but also has too small screen for browsing graphs or playing movie.

Besides, an external multimedia device, which is made by Tatung Co. and bears a trademark elio, has the preceding problem.

In addition, the digital camera has already provided with the function of picture taking and showing so that the external storage device and the digital camera having a display respectively is wasteful.

A main object of the present invention is to provide a digital image picking device with function of host, which comprises an image picking part, a display, a signal connecting port and an input unit.

The input unit has a mode shift part with a device mode and a master control mode can be operated manually or automatically. When the mode shift part is shifted to the master control mode, a master-slave chip in the input unit can be triggered to allow the digital image picking device becoming a host end to browse or play a graphic file, a movie file or a music file of an external device via the display once the signal connecting port is connected to the external device.

Another object of the present invention is to provide a digital image picking device with function of host, which is a digital camera or digital video with a signal connecting port being a USB socket and a mode shift part being a pushbutton or turning knob.

A further object of the present invention is to provide an digital image picking device with function of host, which a master-slave chip is a USB ON-THE-GO (USB OTB) chip.

Further benefits and advantages of the present invention will become apparent by way of the following detailed description with reference to the accompanying drawings, in which:
- Fig. 1 is an isometric view of a digital image picking device with function of host according to the present invention;
- Fig. 2 is a block diagram of a digital image picking device with function of host according to the present invention;
- Figs. 3a and 3b are isometric views illustrating the digital image picking device applied to a digital camera respectively; and
- Figs. 4a and 4b are further isometric views illustrating the digital image picking device according to the present invention applied to a digital video respectively.

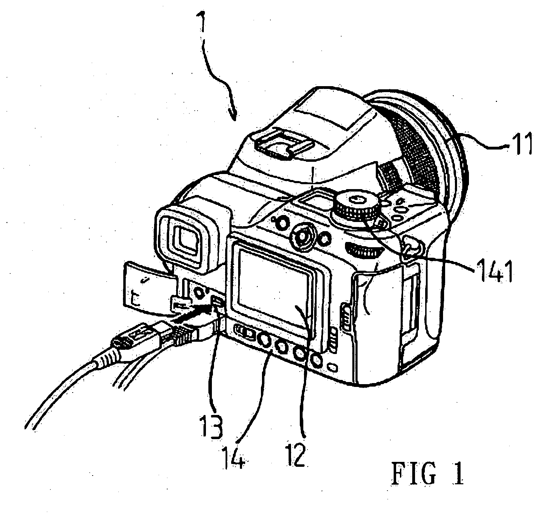

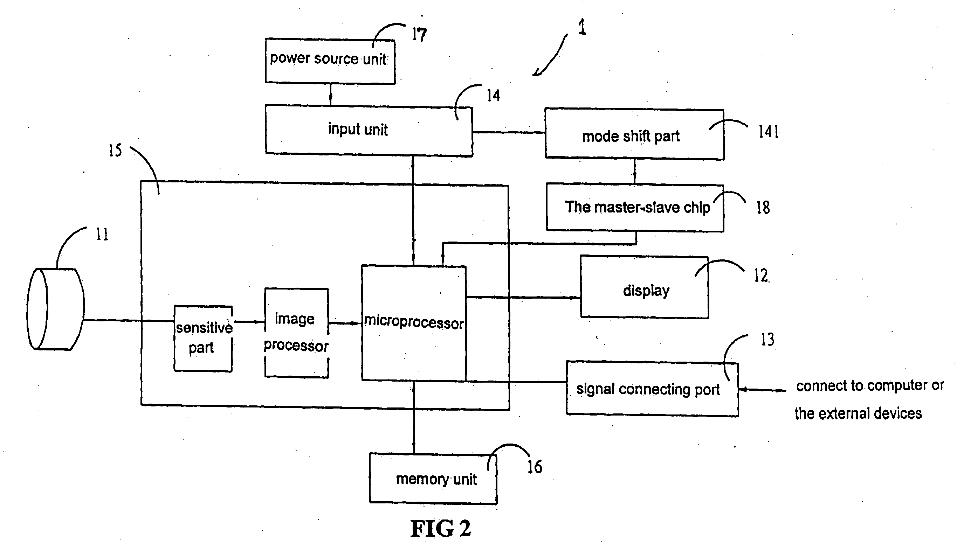

Referring to Figs. 1 and 2, basically the digital image picking device 1 according to the present invention such as the digital camera or digital video provides an image picking part 11, such as lens, a display 12, a signal connecting port 13, such as USB socket, and an input unit 14 at the outer side thereof and provides a image control module 15, which is composed of a sensitive part, a image processor and a microprocessor, a memory unit 16 with built-in memory and/or memory card and a power source unit 17 with battery and/or power input end therein.

Due to principle applied by the digital image picking device and formation thereof being conventional art, which can be popularly seen in the technical information on INTERNET or published patent literature, no detailed will be described further.

Thus, when the USB socket 13 of the digital image picking device 1 is connected to a computer via a transmission line, the USB socket 1 is acted as a peripheral so that the computer can access read, write, delete and copy to the digital image picking device 1 via plug in and use function of the operation system of the computer. Hence, for the computer, the digital image picking device 1 is a device end.

The difference of the digital image picking device 1 according to the present invention from the prior art is in that the input unit 14 has a mode shift part 141.

While in use, it can be switched to the host mode manually or automatically with a pushbutton or a turning knob to trigger a master-slave chip 18 such that the digital image picking device 1 becomes a host end. The master-slave chip 18 can be a USB ON-THE-GO (or USB OTG) chip and the USB OTG interface emphasizes can reach point to point connection to allow the computer peripheral can transmit files to each other without passing through another personal computer or a notebook.

It is noted that the master-slave chip is not restricted to be the USB OTG chip and any chip, which allows the master-slave chip becoming the master control chip, belongs to the scope of the present invention.

Because the master-slave chip 18 is built in the digital image picking device 1, the digital image picking device 1 is the host end relative to the external devices such as the external storage device, card read and portable flash memory (thumb drive).

The advantage of the digital image picking device 1 being the host end is in that the display 12 of digital image picking device 1 being getting bigger is a tendency and the external devices can connect with the USB socket 13 via the USB transmission lines such that the graphic file such as JPG, movie file such as MPG or AVI or music file such as MP3 can be browsed or played through the options shown on the display 12.

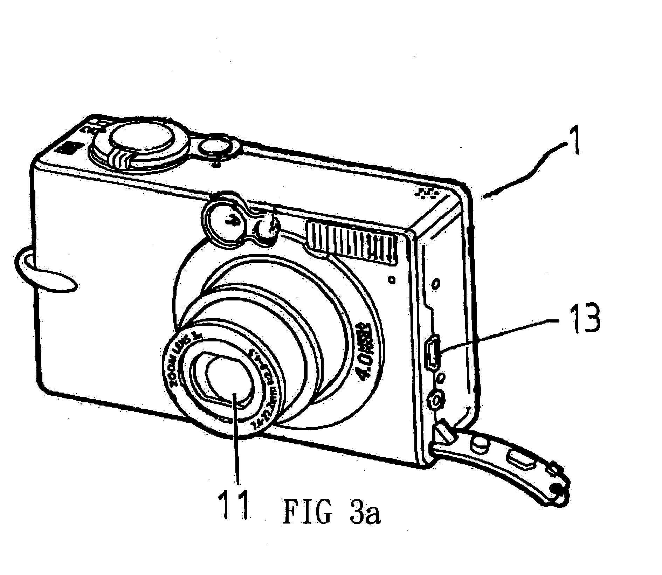

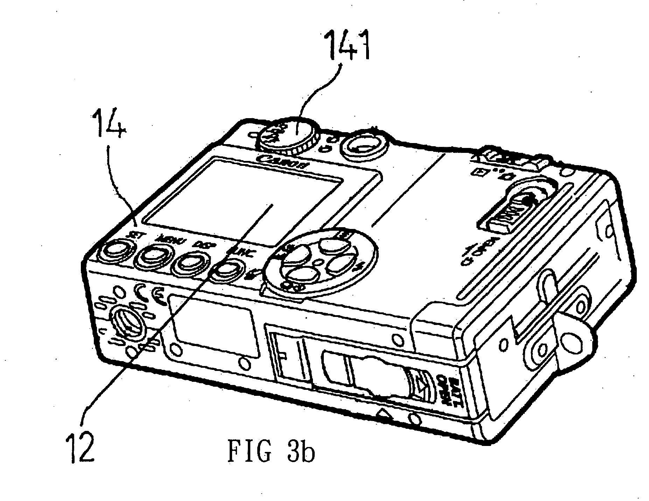

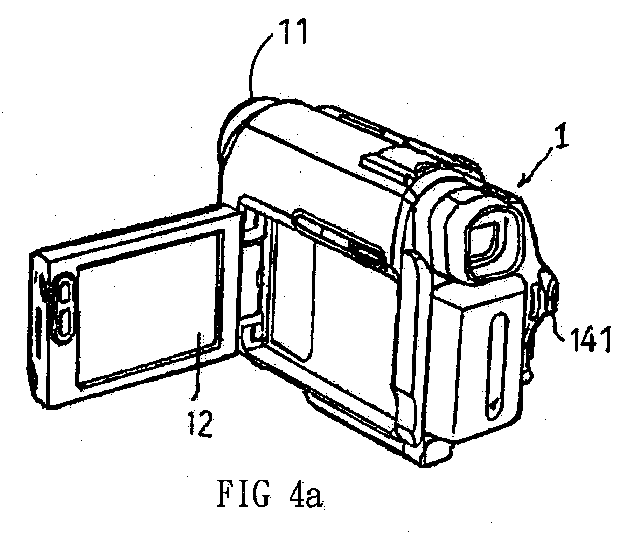

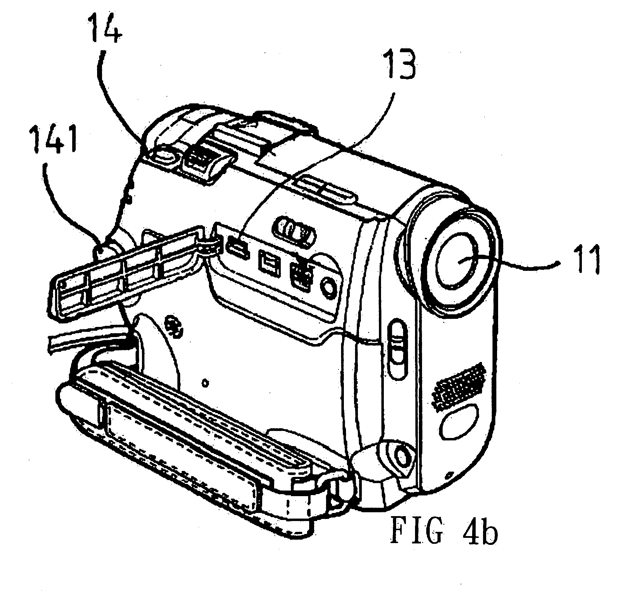

In case of the accessed memory card being incompatible with the memory card socket of the present invention, the memory card can be inserted into the card read and the card read is connected to the USB transmission line such that the graphic file and the movie file in the memory card can browsed or played via the display 12. The portable flash memory device can be connected to the digital function of the digital image picking device greatly. Figs. 3a and 3b are isometric views illustrating the digital image picking device of the present invention being applied to the digital camera, and Figs. 4a and 4b are isometric views illustrating the digital image picking device of the present invention being applied to the digital video.

It is appreciated that the digital image picking device of the present invention provides a function of being a host end in addition to a device end such that the digital image picking device of the present invention can be a periphery or a master browser/player selectively through operating the mode shift part depending on the target device being connected to the digital image picking device. Further, deficiency of the preceding external multimedia storage device mounted with a display can be improved completely.

Although the invention has been explained in relation to its preferred embodiment, it is to be understood that many other possible modifications and variations can be made without departing from the spirit and scope of the invention as hereinafter claimed.

## Claims

1. A digital image picking device with function of host, comprising:
an image picking part (1), a display (12), a signal connecting port (13), and an input unit (14);
**characterized in that**, the input unit (14) has a mode shift part (141) with a device mode and a master control mode can be operated manually or automatically;
**characterized in that**, when the mode shift part is shifted to the master control mode, a master-slave chip (18) in the input unit (14) can be triggered to allow the digital image picking device becoming a host end to browse or play a graphic file, a movie file or a music file of an external device via the display once the signal connecting port (13) is connected to the external device.

2. Device according to claim 1, **characterized in that** the digital image picking device is a digital camera or a digital video.

3. Device according to claim 1, **characterized in that** the signal connecting port (13) is a USB socket.

4. Device according to claim 1, **characterized in that** the mode shift part (141) is a pushbutton or a turning knob.

5. Device according to claim 1, **characterized in that** the master-slave chip (18) is a USB ON-THE-GO (USB OTG) chip.
